# EUROPEAN PATENT SPECIFICATION

(11) **EP 1 023 630 B1**
(45) Date of publication and mention of the grant of the patent: **23.03.2005**
(21) Application number: 98940411.6
(22) Date of filing: 27.08.1998
(51) Int. Cl.: G02F 1/1333, C03B 33/02

(54) **IMPROVEMENTS IN OR RELATING TO LIQUID CRYSTAL DISPLAYS**
FLÜSSIGKRISTALL-ANZEIGEVORRICHTUNGEN
AMELIORATIONS APPORTEES A DES AFFICHEURS A CRISTAUX LIQUIDES

(30) Priority: 15.10.1997 GB 9721804; 07.07.1998 GB 9814577
(43) Date of publication of application: 02.08.2000
(73) Proprietor: BAE Systems Avionics Limited, Farnborough, Hampshire GU14 6YU (GB)
(72) Inventor: WATSON, David, Stewart, Nimmo, Edinburgh EH14 1DB (GB)
(74) Representative: Rooney, Paul Blaise
(86) International application number: PCT/GB1998/002586
(87) International publication number: WO 1999/019765

(56) References cited:
- WO-A-93/11452
- JP-A- 8 122 769
- US-A- 5 808 719
- PATENT ABSTRACTS OF JAPAN vol. 96, no. 10 & JP 08 146444 A (NIPPONDENSO), 7 June 1996
- PATENT ABSTRACTS OF JAPAN vol. 13, no. 245 (P-881) & JP 01 048024 A (SEIKO), 22 February 1989
- PATENT ABSTRACTS OF JAPAN vol. 018, no. 194 (P-1722), 5 April 1994 & JP 06 003633 A (FUJITSU LTD), 14 January 1994
- PATENT ABSTRACTS OF JAPAN vol. 008, no. 093 (C-220), 27 April 1984 & JP 59 008632 A (MITSUBOSHI DIAMOND KOGYO KK), 17 January 1984
- PATENT ABSTRACTS OF JAPAN vol. 1995, no. 01 28 February 1995 & JP 06 281 943 A (ASAHI GLASS CO LTD) 07 October 1994
- PATENT ABSTRACTS OF JAPAN vol. 1996, no. 04 30 April 1996 & JP 07 325 280 A (DAINIPPON PRINTING CO LTD) 12 December 1995

## Description

This invention relates to a liquid crystal display as recited in claims 21 or 22, to a method of manufacturing a liquid crystal display as recited in claim 1, and also to apparatus to aid manufacture of a liquid crystal display as recited in claim 25.

Generally, displays for reproduction of information have historically been of a cathode ray tube construction. In an environment where space is limited traditional displays were typically manufactured to be square, or square with rounded corners, in order to make the best use of the limited space available.

Liquid crystal displays are currently considered suitable substitutes for applications previously requiring cathode ray tube technology. The replacement of cathode ray tubes can be either for new applications or for the purpose of upgrading existing technology through retrofit design. When manufactured in large quantities, liquid crystal displays are of modest cost compared with an equivalent cathode ray tube.

JP A 8146444 illustrates a typical method of manufacturing a prior art liquid crystal display. A part finished display panel, is formed in two parts. The first part is filled with liquid crystal and swells. The attached second part provides an overspill compartment in communication with the liquid crystal in the first part, such that when the part finished panel is pressed and heated, the liquid crystal in the first part causing the swelling enters the second part thereby removing the swelling from the first part. The second part containing the overspill liquid crystal is then removed from the first part which then becomes the finished display panel. This method of manufacturing can be used when producing panels in large quantities.

However, when liquid crystal displays need to be custom made in relatively low numbers to suit specific requirements, the cost per unit is very high due to expensive tooling and manufacturing charges. Furthermore, manufacturing yield rates are low, high pixel defect levels have to be tolerated and there are substantial delivery delays.

Document JP-7325280 discloses a method of cutting into a liquid crystal device comprising a liquid crystal/polymer matrix composite between two substrates.

It is an objective of the present invention to facilitate the production of custom made liquid crystal displays.

According to a first aspect of the present invention, a method of manufacturing a liquid crystal display having a liquid crystal sealed between first and second substantially parallely spaced transparent plates which form an operative area of the display, comprises removing an excess region of a pre-manufactured liquid crystal display by cutting the first and second plates to isolate the excess region of the first and second plates and to expose cut edges along the operative areas of the first and second plates.

The terms "cutting" or "cut" as used throughout this document means the action of separating an excess region from an operative region in any way. For example, this may be achieved by grooving and then fracturing a plate, or cutting through a plate with a laser or machine tool.

The inventor has determined that, contrary to the present understanding of the nature of liquid crystal displays, the highly complex electronic and physical structure of such displays can be re-manufactured to provide alternative shaped displays at a much reduced cost per unit, when compared with the cost of a custom made display, and without substantial damage to the display. Furthermore, standard sized displays are readily available devices which may be found in personal computers and other products which use standard sized liquid crystal displays and are manufactured in very high volumes, and hence at low cost. A liquid crystal display comprises a liquid crystal sealed between first and second parallely spaced transparent plates which form an operative area of the display. In such a display there is a miniscule spacing between the plates. The inventor has discovered that this spacing, when the plates are re-manufactured, exerts a capillary action on the liquid crystal which retains the liquid crystal between the plates without appreciable loss or disruption of the liquid crystal.

By using a method in accordance with the invention, it is possible to start with an inexpensive standard display and re-fashion it to particular requirements, instead of designing and manufacturing a small number of expensive custom displays or ordering such custom displays from a specialist manufacturer with an added high premium.

The transparent plates are usually formed from glass or another suitable transparent material. The method may include cutting the first and second plates at an oblique angle.

The method may also include removing the excess region of the pre-manufactured liquid crystal display by forming a first groove in the first plate of sufficient depth to isolate the excess region of the first plate, forming a second groove in the second plate of sufficient depth to isolate the excess region of the second plate, the second groove being substantially aligned with the first groove, and fracturing the first plate and second plate along their respective grooves.

The method may include forming the first and second grooves simultaneously and may also include fracturing the first and second plates simultaneously along the first and second grooves.

The method may include fracturing the first plate along the first groove prior to forming the second groove in the second plate and fracturing the second plate along the second groove.

The method, may further include fracturing each grooved plate by placing the other plate on a ridge substantially corresponding with the groove and applying pressure to the excess region.

Preferably, the liquid crystal display is placed on an apparatus comprising a fracturing platform having a first light polarising layer to polarise radiation emitted from a radiation source and a second light polarising layer located between a viewer's eye position and the liquid crystal display, and the method may include viewing the propagation of each fracture along its groove as an area against a contrasting background through the second light polarising layer.

Alternatively, the method may include removing the excess region of the pre-manufactured liquid crystal display by cutting the first and second plates using a laser beam thereby isolating the excess region of the first and second plates and exposing the cut edges along the operative areas of the first and second plates. The laser beam may cut entirely through both plates, and this may done from one side of the display. Use of a laser to cut the plates gives good control of the cutting process and is particularly suitable where more complex or rounded configurations are required. It is also envisaged that a laser beam can be used to form grooves in each plate and then pressure applied to the excess area to fracture each plate along the groove. In this manner contamination of the liquid crystal is avoided since the plates may be cleaned after grooves has been formed.

In a further alternative, the method may include removing the excess region of the pre-manufactured liquid crystal display by freezing the liquid crystal between the first and second plates and machining through the first and second plates thereby isolating the excess region of the first and second plates and exposing the cut edges along the operative areas of the first and second plates. It will be understood that the term freezing includes any reduction in the viscosity of the liquid crystal thereby inhibiting its egress from between the first and second plates.

Although freezing is particularly applicable to this further alternative, it may also be used in other methods in accordance with the invention, for example, when a laser beam is used or the plates are fractured following grooving. Accordingly, the method may include freezing the liquid crystal between the first and second plates prior to cutting the first and second plates.

In the case where conductive layers are adhered to the first and second plates and are electrically connected to driver connections, the method may also include cutting and removing any driver connection associated with the excess region prior to cutting the first and second plates. In the case where a light polariser is adhered to at least one of the plates, the method may include cutting and removing a narrow strip of the light polariser in a region either side of where the cut edge associated with each plate is to be formed.

The method may also include removing air voids within the liquid crystal by applying pressure to at least one of the plates

Preferably, the method may include sealing the exposed fractured edges to retain the liquid crystal between the first and second plates. The method may include sealing the exposed cut edges using a laser beam arranged to melt the first and second plates together along the exposed cut edges. This is particularly convenient where a laser beam is used to remove the excess region.

Alternatively, the method may include removing an excess region from at least two pre-manufactured liquid crystal displays to leave exposed cut edges, aligning and positioning the exposed cut edges of one of the liquid crystal displays with the corresponding exposed cut edges of an adjacent liquid crystal display, and laminating the liquid crystal displays to form a single display with increased operative area.

According to a second aspect of the invention, a liquid crystal display comprises a pre-manufactured liquid crystal display having a liquid crystal sealed between first and second parallely spaced transparent plates and in which an excess region of the pre-manufactured liquid crystal display has been removed by cutting both of its transparent plates along a common line. In this manner a modified liquid crystal display is provided as a selected portion of a pre-manufactured liquid crystal display.

The first and second plates may be cut at an oblique angle. The cut edges of the transparent plates may be resealed to retain the liquid crystal. A laser beam may be used to melt the first and second plates together.

A composite liquid crystal display preferably comprises at least two of these modified liquid crystal displays supported with their respective cut edges aligned and abutting. The cut edges are preferably supported in alignment by a transparent lamina adhered over their first transparent plates. The cut edges may additionally be supported in alignment by a second lamina adhered over their second transparent plates.

According to a third aspect of the present invention apparatus, to aid removal of an excess region of a pre-manufactured liquid crystal display having liquid crystal sealed between first and second parallel spaced transparent plates which form an operative area of the display and in which a groove has been formed in one of the plates between the excess region and an operative region of the liquid crystal display, comprises a fracturing platform having a light polarising layer located between transparent first and second supporting surfaces, a radiation source located to emit radiation through the fracturing platform, a raised region arranged on an opposite surface of the fracturing platform to which the light source is located, the raised region being arranged to contact a plate of the liquid crystal display in a region substantially corresponding to the groove in the other plate, and a light polarising layer disposed between a viewer's eye position and a liquid crystal display located on the fracturing platform. In this manner a viewer observes the liquid crystal display as a dark area and when the viewer applies pressure to the excess region any fracture in the grooved plate appears as a light area.

The operative area of the liquid crystal display may be clamped to the fracturing platform whilst leaving the excess region freedom of movement. The raised region may be a ridge.

The invention will now be described, by way of example only, with reference to the accompanying drawings, in which:-
Figure 1 is a diagrammatic cross-section through a conventional prior art liquid crystal display taken along the line 1-1 in Figure 2;
Figure 2 is a plan view of the pre-manufactured liquid crystal display illustrated in Figure 1, but showing the removal of an excess region along its right-hand edge;
Figure 3 is an underplan view of the liquid crystal display illustrated in Figure 2,
Figure 4 is a plan view similar to Figure 2, but showing the removal of an excess region along its right-hand lower corner;
Figure 5 is a plan view of a pre-manufactured liquid crystal display that has been processed by removing a first excess region along its right-hand edge and a second excess region along its bottom edge to provide a decreased display area;
Figures 6 and 7 are plan views of pre-manufactured liquid crystal displays which have been processed to remove curved excess regions.
Figure 8 schematically illustrates sealing of cut edges formed in a pre-manufactured liquid crystal display.
Figure 9 illustrates the processing of four pre-manufactured liquid crystal displays, each similar to that shown in Figure 5, to provide an increased display area, and
Figure 10 is a diagrammatic side elevation of apparatus for aiding removal of an excess area of a pre-manufactured liquid crystal display.

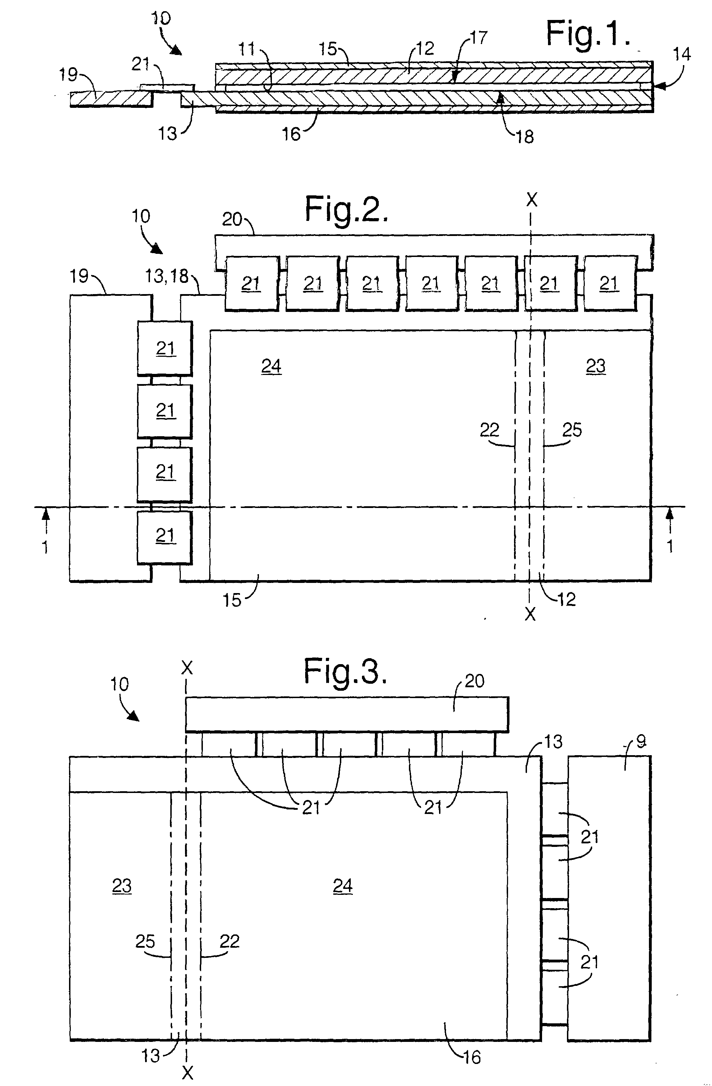

In Figure 1, a typical liquid crystal display 10 comprises liquid crystal I 1 trapped between first and second parallely spaced transparent glass plates 12, 13 by an ultra-violet cured adhesive seal 14. Patterned light polarising substrates 15, 16 are respectively adhered to the outer surfaces of the glass plates 12, 13. Very thin conductive layers 17, 18 are respectively coated over the inner surfaces of the glass plates 12, 13 and are used to generate an electric field between corresponding portions of the conductive layers 17, 18 to cause the liquid crystal 11 in the field to rotate and block light from passing. No light can pass the rotated electric crystal within the electric field and a viewer will observe a dark area corresponding to the shape of the electric field. By controlling a plurality of such corresponding portions of the conductive layers 17 and 18, the liquid crystal display 10 can be operated to convey information to the viewer.

In a first embodiment, as will be seen from Figures 1 and 2, the glass plate 13 and its associated conductive layer 18 are larger than the glass plate 12 so that they extend to the left towards a vertical driver card 19, and upwards towards a horizontal driver card 20. A series of ribbon connectors or TABs 21 electrically interconnect the driver cards 19 and 20 with the various portions of the conductive layers 17 and 18 in well-known manner so that the driver cards 19, 20 will determine which portions of the conductive layers 17 and 18 are to be energised.

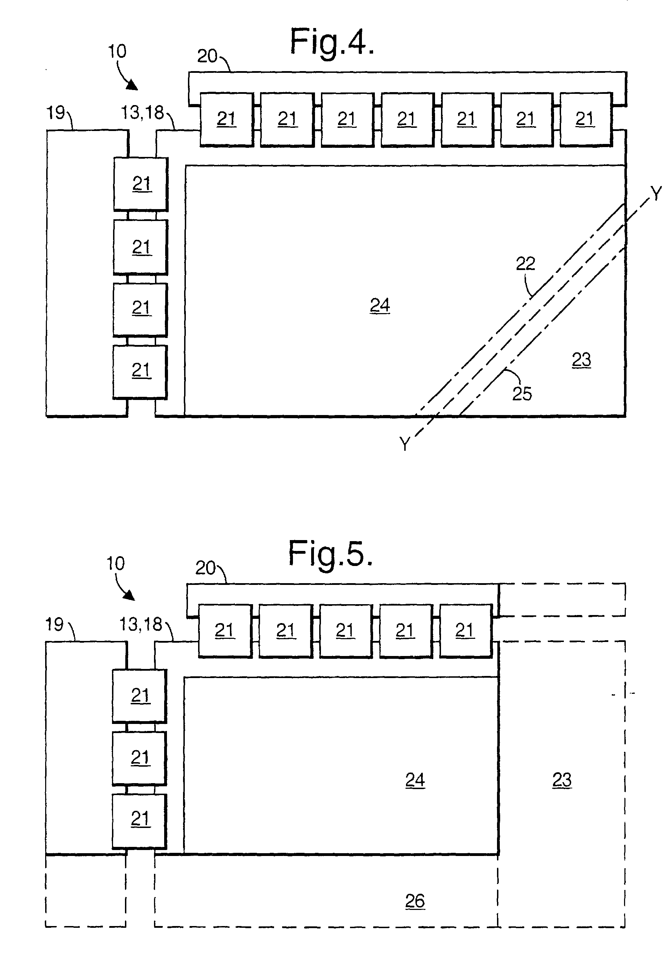

Figure 3 shows the reverse side of the liquid crystal display 10, the reverse side of the vertical and horizontal TAB's 21, driver cards 19 and 20, and the light polarising substrate 16.

In Figures 2 and 3 the required width of the final liquid crystal display 10 is indicated by a chained line 22 and is achieved by removing an excess region 23 of the liquid crystal display 10 in the following manner. With reference to Figure 2, one of the vertical driver cards 20 is cut, using any suitable cutting apparatus, along a broken line X-X which is located just outside an operative region 24 of the liquid crystal display 10 that is to be retained. The vertical driver card 20 may be held in a support fixture, not shown, and a fine tooth saw may be used to cut through the vertical driver card 20 along the line X-X. This cut must be beyond any TAB 21 carrying connections to the operative region 24 that are to be retained. Any rough edges can be filed to prevent any track cut from shorting.

The portion of the vertical driver card 20 for the excess region 23 is then removed by disconnecting the corresponding TABs 21 using a suitable solvent or heating process. In this manner the removed portion of the vertical driver card 20 and associated TABs 21 are not damaged and can be retained for potential repair use.

Optionally, a narrow strip of the light polarising substrate 15, defined by the chained line 22 and a parallely-spaced chained line 25 on the opposite side of the line X-X, is then removed using suitable cutting apparatus which will not damage the exposed portion of the underlying glass plate 12. For example, a scalpel can be used to cut along the lines 22, 25 so that the narrow strip of the light polarising substrate 15 can be peeled off to expose the glass plate 12 which is then cleaned to remove all traces of the adhesive that was used to bond the strip of the light polarising substrate 15 to the glass plate 12.

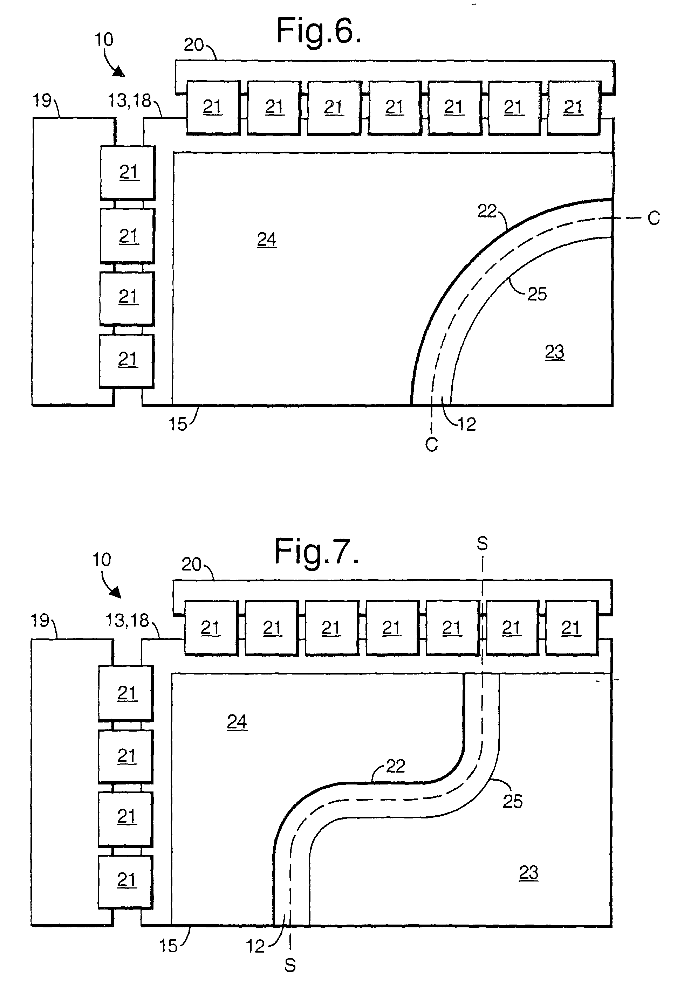

A groove is then formed in the glass plate 12 along the line X-X of sufficient depth to promote the generation of a fracture along the length of the groove when pressure is applied to the excess region 23. This groove can be formed using a scribe, a machine tool set to machine a controlled depth, or a diamond wheel cutter. It may also be possible to use a laser beam operated to form a groove of controlled depth. An apparatus used to aid removal of the excess region 23 is described below with reference to Figure 7.

The liquid crystal display 10 is then reversed to expose its opposite surface as shown in Figure 3. Again, optionally a narrow strip of the polarising substrate 16 is removed from either side of the line X-X to expose a region of the glass plate 13. The process of removing the narrow strip of the substrate 16 is the same as that already described for the removal of the narrow strip of the substrate 15. The exposed portion of the glass plate 13 is then cleaned to remove all traces of the adhesive that was used to bond the strip of the light polarising substrate 16 to the glass plate 13. A groove is then formed in the glass plate 13 along the line X-X of sufficient depth to promote the generation of a fracture along the length of the groove when pressure is applied to the excess region 23. This can again be achieved by using the apparatus that is described below with reference to Figure 7.

It will be understood that either a groove can be formed in glass plate 12 and the glass plate then fractured along that groove prior to forming a corresponding groove in the other glass plate 13 or corresponding grooves can be formed in both glass plates 12, 13 prior to forming fractures in each plate 12, 13.

By fracturing the glass plates 12 and 13 along the line X-X, the excess region 23 of the liquid crystal display 10 can be removed to expose cut edges of the glass plates 12 and 13. The minuscule spacing between the glass plates 12 and 13 generates a capillary action which acts on the liquid crystal 11 and serves to retain the liquid crystal 11 between the glass plates 12 and 13 so that no appreciable loss or disruption of the liquid crystal 11 occurs.

The process of removing the excess region 22 can create minute voids in the liquid crystal 11, particularly if the cut edges of the transparent plates 12 and 13 do not coincide. Provided the fractures form a clean break, these voids rapidly disappear. Gentle pressure applied to the glass plates 12, 13 can also be used to eliminate some voids and manoeuvre persistent voids to the cut edges and hence out of the liquid crystal 11. Positioning the line X-X along which fractures are formed further away from the operative region 24 reduces the risk of voids or bubbles being formed.

Although the glass plates 12 and 13 could be cut right through along the line X-X, as described below with reference to Figures 6 to 8, there is an increased chance of contaminating the liquid crystal 11 in the operative region with particles of glass and cutting fluid. By only partly cutting through the glass plates 12 and 13, such contaminants can be positively excluded from contact with the liquid crystal, and the glass plates 12 and 13 can be cleaned before being fractured along the line X-X.

If desired, the grooves in the glass plates 12 and 13 can be formed simultaneously by feeding the liquid crystal display between a pair of diamond wheel cutters, thereby also ensuring that the two grooves are parallely aligned. It will be understood that the grooves formed in glass plates 12, 13 and the cutting of the polarising substrates 15, 16 can be performed in a single action.

Irrespective of whether the grooves in the glass plates 12 and 13 are formed separately or at the same time, in this particular embodiment, the cut edges of the glass plates 12 and 13 are sealed by applying a bead of ultra-violet curing liquid crystal display sealant adhesive, and then curing with an ultra-violet light source. This process provides a liquid crystal display 10 having a reduced operative region 24 without the need to commission the production of a custom display by a manufacturer

Figure 4 illustrates a modification of the process described with reference to Figure 2 to permit the liquid crystal display 10 to be chamfered, that is to have a comer removed. The same reference numerals have been used as in Figures 2 and 4 to denote equivalent features and only the points of difference are now described. The excess region 23 is removed from the operative region 24 along a broken line Y-Y which is inclined to both of the card drivers 19 and 20. The removal process is exactly the same as described with reference to Figure 2 except that there is no need to cut the vertical card driver 20 or to remove any TAB 21.

Figure 5 show how the liquid crystal display 10, produced as described with reference to Figures 1 to 3, can have its operative region 24 reduced still further by removing a horizontal excess region 26 together with the lower portion if the horizontal card driver 19 and associated TAB 21.

Figures 6 and 7 illustrate a second embodiment of the process for removing an excess region from a pre-manufactured liquid crystal display. The same reference numerals have been used as those in Figures 2 to 5 to denote equivalent features.

The required shape of the final liquid crystal display 10 is indicated by a solid line 22 and is achieved by removing an excess region 23 of the liquid crystal display 10 in the following manner.

With reference to Figure 6, narrow strips of light polarising substrate 15, 16, defined by the solid line 22 and a parallely-spaced line 25 on the opposite side of broken line C-C, are optionally removed from both sides of the liquid crystal display 10 and the exposed areas cleaned, as previously described. A laser, not shown, is then used to cut through glass plate 12 and glass plate 13 along line C-C. In this manner both glass plates 12, 13 are cut at the same time and the excess region 23 of the liquid crystal display 10 can be removed to expose cut edges of the glass plates 12 and 13.

With reference to Figure 7, a portion of the vertical driver card 20 for the excess region 23 is cut and removed by disconnecting the corresponding TAB's 21, as previously described Narrow strips of light polarising substrate 15, 16, define by the solid line 22 and a parallely-spaced line 25 on the opposite side of broken line S-S, are optionally removed from both sides of the liquid crystal display 10 and the exposed areas cleaned, as previously described A laser, not shown, is then used to cut through glass plate 12 and glass plate 13 along line S-S simultaneously, as previously described, to expose cut edges of the glass plates 12 and 13.

It will be understood that although Figures 6 and 7 illustrate curved lines C-C and S-S the process of cutting with a laser can equally be applied to the straight line cuts shown in Figures 2 to 5 or other cut shapes not illustrated. Furthermore, the laser may be used to cut through the driver card and polarising substrate.

The gap between the plates 12 and 13 is then sealed either by applying a bead of ultra-violet curing sealant adhesive and curing under ultra-violet light conditions, or applying a glass frit or using the laser to weld the plates 12 and 13 together

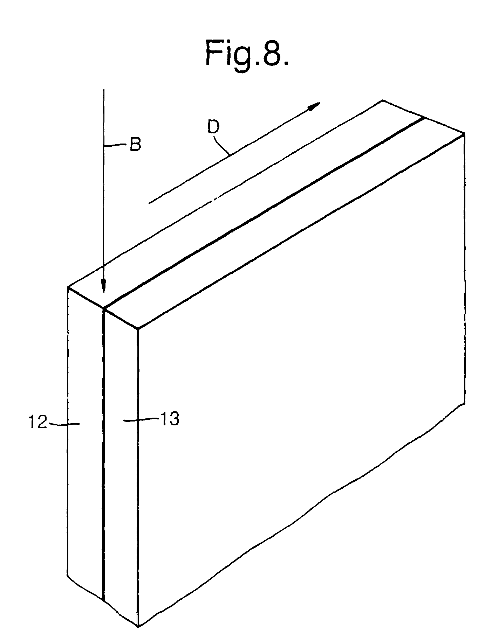

In Figure 8, the glass plates 12 and 13 can be welded to one another by applying a laser beam B in direction D along the cut edge thereby melting the glass plates 12, 13 and forming a seal between the plates 12 and 13 To aid clarity of Figure 8, the light polarising substrates and the conductive layers are not shown and the card drivers and associated TAB's have also been omitted.

In a third embodiment of the process, not illustrated, the liquid crystal within the liquid crystal display or a part thereof can be frozen or have its viscosity reduced using liquid nitrogen and both plates can then be machined through in one action using, for example, a diamond wheel cutter. In this manner the risk of contamination of the liquid crystal is mitigated and the number of voids introduced into the liquid crystal is reduced.

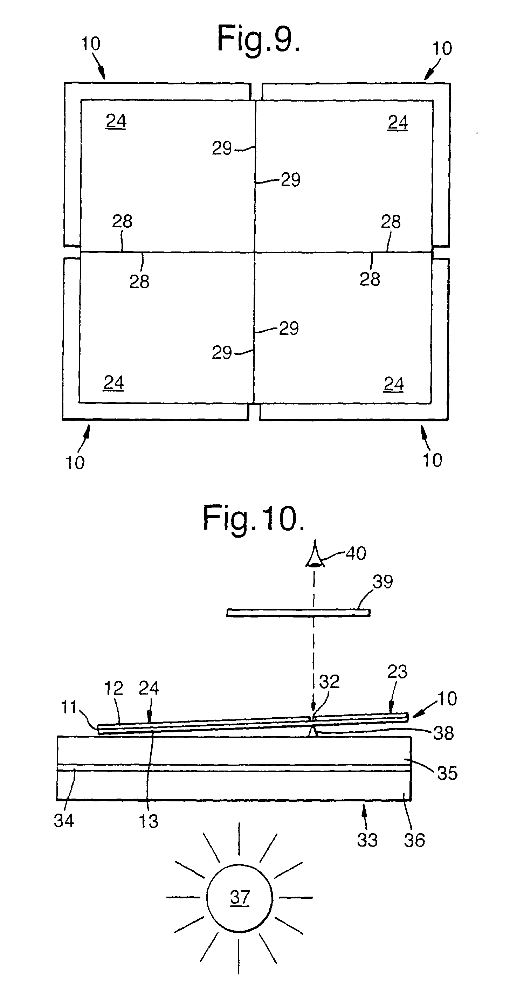

Should a liquid crystal display be required with a larger operative region then, as shown in Figure 9, four liquid crystal displays 10 can be prepared as described with reference to Figure 5 and can have their respective operative regions 24 combined by aligning and abutting their respective cut edges 27 and 28, the four liquid crystal displays 10 then being laminated to form a single display with increased operative area Such lamination is preferably achieved by adhering transparent plates to the entire front and back surfaces of the four operative regions 24 using an optically clear ultra-violet cured adhesive.

The processes described above allow rectangular or square format liquid crystal displays, with reduced or increased operative areas, to be produced quickly and cheaply by reshaping standard commercial rectangular shaped displays which are currently produced in vast quantity at low unit cost and with high quality. Furthermore, since the shaping process is only limited by the positioning of the cards drivers 19, 20 and the excess regions 23, 26 to be deactivated, the process could also be used to produce liquid crystal displays of other shapes, including chamfered corners as taught by Figure 4, curved shapes taught by Figures 6 and 7 and also L-shaped and triangular-shaped formats.

The above process is effective for removing an excess region of a pre-manufactured liquid crystal display in which the cards drivers are relatively simple in format with only a few passive devices associated with each TAB Where more complex circuitry exists and the card drivers cannot simply be cut, the process described above can be limited to the technique for cutting the transparent plates, the driver cards then being re-engineered or repositioned using flexible circuit extensions.

The groove or final cut edge of each plate in a liquid crystal display may be arranged such that it forms an oblique angle. In this manner a greater surface area is presented for sealing or bonding to a second liquid crystal display arranged to abut the first liquid crystal display when forming a display having a greater operative area.

Figure 10 illustrates apparatus 31 to aid removal of an excess area 23 from a pre-manufactured liquid crystal display 10. As described above, the liquid crystal display 10 comprises liquid crystal 11 sealed between first and second parallely spaced glass plates 12, 13 which also define an operative region 24 that is to be retained. To aid clarity of Figure 10, the light polarising substrates and the conductive layers are not shown, and the card drivers are also omitted. However, these would typically be arranged as described above with reference to Figure 1

A groove 32 has been formed part-way through the glass plate 12 as described above. The apparatus 31 comprises a fracturing platform 33 having a light polarising layer 34 located between transparent first and second supporting surfaces 35, 36. A radiation source 37, for instance a light source, is arranged to emit radiation through the fracturing platform 33. A raised region, in the form of a ridge 38, is carried by the first supporting surface 25 and is arranged to contact the lower glass plate 13 of the liquid crystal display 10 along a line coinciding with the groove 32 formed in the transparent plate 12.

The apparatus also comprises a light polarising layer 39 disposed between an operator's eye position 40 and the liquid crystal display 10 which is positively located on the fracturing platform 33.

In operation, the operator observes the liquid crystal display 10 as a dark area since radiation from source 37 is polarised by the layer 34, polarised by the liquid crystal 11 and further polarised by the layer 39. As the operator applies pressure to the excess region 23, the glass plate 12 will start to fracture along groove 32. As the fracture spreads along the groove 32, it will appear as a light area against the dark area background of the liquid crystal display 10 since the thickness of the liquid crystal 11 is different in the regions where fracture has occurred than in those where it has not, varying the degrees of lighting. Radiation will therefore not be polarised by the liquid crystal 11 along the fracture

Once a fracture in the glass plate 12 has been achieved, a groove corresponding to groove 32 is formed in the glass plate 13 as has been described above. The liquid crystal display 10 is then turned over and repositioned on the fracturing platform 33 with the glass plate 12 contacting the raised edge 38 along either the line of the groove 32 or the line of the corresponding groove in glass plate 13 Again pressure is applied by the operator to the excess region 23 so as to fracture the glass plate 13 along its corresponding groove. When both glass plates 12 and 13 have been fractured along their respective grooves 32, the excess region 23 is removed and the gap between the fractures sealed as described above.

Alternatively, the liquid crystal display 10 can have grooves 32 on both plates 12, 13 prior to fracturing as described above. As a further alternative, once a plate 12 or plates 12, 13 have had grooves 32 applied, the liquid crystal display is placed on the raised edge 38 such that the excess region 23 contacts the raised edge 38 and a downward pressure is applied to groove or grooves 32 to fracture the plate 12 or plates 12, 13.

## Claims

1. A method of re-manufacturing a pre-manufactured liquid crystal display (10) having first and second substantially parallely spaced transparent plates (12, 13) which form an operative area of the display, liquid crystal (11) between the plates (12, 13), and a seal (14) sealing edge regions of the plates (12, 13) to retain the liquid crystal (11) between the plates (12, 13), **characterised by** removing an excess region (23) of the plates (12, 13), liquid crystal (11) and seal (14) of the operative area of the pre-manufactured liquid crystal display (10) by cutting, to obtain a reduced operative area re-manufactured liquid crystal display (24).

2. A method as claimed in Claim 1, in which the removing step is performed by forming in the plates (12, 13) respective grooves (22, 25) aligned with each other, and by fracturing both plates (12, 13) along the respective grooves (22, 25).

3. A method as claimed in Claim 2, in which the grooves are formed simultaneously.

4. A method as claimed in Claim 2 or Claim 3, in which the fracturing step is performed by simultaneously fracturing both plates (12, 13).

5. A method as claimed in Claim 2, in which the groove forming and fracturing steps are alternatingly performed by grooving and fracturing one of the plates (12) prior to grooving and fracturing the other of the plates (13).

6. A method as claimed in any one of Claims 2 to 5, in which the fracturing step is performed by positioning a respective groove (22, 25) in alignment with a raised projection, and by applying pressure against the excess region (23).

7. A method as claimed in Claim 6, in which the positioning step is performed by positioning a first polarizer (15) between a viewer and the plates (12, 13), and a second polarizer (16) between the plates (12,13) and a source (37) of radiation, and viewing the propagation of each fracture along the respective groove (22, 25) through the second polariser.

8. A method as claimed in Claim 1, in which the removing step is performed by directing toward the plates (12, 13) a laser beam having an energy level sufficient to pierce through the plates (12, 13) and by performing a relative movement between the plates (12, 13) and the laser beam to cut the plates (12, 13) along a cutting line (32), thereby isolating the excess region (23) and forming cut unsealed edges on the plates (12, 13).

9. A method as claimed in any one of Claims 1 to 8, further comprising the step of reducing a viscosity characteristic of the liquid crystal (11) prior to performing the removing step.

10. A method as claimed in Claim 9, in which the reducing step is performed by reducing a temperature of the liquid crystal (11) to a freezing temperature, and wherein the removing step is performed by machining through the plates (12, 13).

11. A method as claimed in any one of Claims 1 to 10, in which the removing step is accompanied by exposing unsealed edges of the plates (12, 13); and further comprising the step of re-sealing the unsealed edges.

12. A method as claimed in Claim 11, in which the re-sealing step is performed by thermally fusing the unsealed edges together.

13. A method as claimed in any one of Claims 1 to 12, in which the plates have polarizing layers (15,16) on external surfaces of the plates (12, 13); and further comprising the step of peeling a strip of at least one of the polarizing layers (15, 16) off a respective plate (12, 13) prior to performing the removing step.

14. A method as claimed in Claim 13, in which the removing step is performed by forming a cutting line through the plates (12, 13), and wherein the peeling step includes forming two peel lines at opposite sides of the cutting line, and peeling said at least one polarizing layer (15,16) between the peel lines.

15. A method as claimed in any one of Claims 1 to 14, in which the plates have conductive layers (17, 18) on internal surfaces of the plates (12, 13), and driver connections (21) on at least one of the plates (12, 13) for energizing the conductive layers (17, 18), and further comprising the step of cutting through the conductive layers (17, 18) and at least one of the driver connections (21) connected to the excess area (23).

16. A method as claimed in Claim 15, in which the step of cutting said at least one driver connection (21) is performed prior to the removing step.

17. A method as claimed in Claim 11 and further comprising the step of removing air voids within the liquid crystal (11), after the removal step has been performed but before performing the re-sealing step, by applying pressure against at least one the plates (12, 13).

18. A method as claimed in any one of Claims 1 to 17, in which the removal step is performed by cutting the plates (12, 13) along a direction perpendicular to the plates (12, 13).

19. A method as claimed in any one of Claims 1 to 17, in which the removal step is performed by cutting the plates (12, 13) along a direction at an oblique angle relative to the plates (12, 13).

20. A method as claimed in any one of Claims 1 to 17, further comprising the step of making another re-manufactured liquid crystal display (24) from another pre-manufactured liquid crystal display (10); and the step of combining the re-manufactured displays (24) to form a single composite display with an increased size operative area.

21. A liquid crystal display (24) manufactured by the method of any one of Claims 1 to 20.

22. A composite liquid crystal display comprising at least two reduced area re-manufactured liquid crystal displays (24) made according to the method of Claim 20, supported with their respective cut edges (28, 29) aligned and abutting.

23. A composite liquid crystal display, as claimed in Claim 22, in which the cut edges (28, 29) are supported in alignment by a transparent lamina adhered over their first transparent plates (12).

24. A composite liquid crystal display, as claimed in Claim 23, in which the cut edges (28, 29) are additionally supported in alignment by a second lamina adhered over their second transparent plates (13).

25. Apparatus, to aid removal of an excess region (23) of a pre-manufactured liquid crystal display having liquid crystal (11) sealed between first and second parallel spaced transparent plates (12, 13) which form an operative area (23, 24) of the display, and with a groove (32) having been formed in one of the plates (12) between the excess region (23) and a required region (24) of the liquid crystal display, **characterised by** comprising:
a fracturing platform (33) having a light polarising layer (34) located between transparent first and second supporting surfaces (35,36),
a radiation region source (37) located to emit radiation through the fracturing platform (33),
a raised region (38) arranged on an opposite surface of the fracturing platform (33) to which the light source (37) is located, the raised region (38) being arranged to contact a plate (13) of the liquid crystal display in a region substantially corresponding to the groove (32) in the other plate (12), and
a light polarising layer (39) disposed between a viewer's eye position (40) and a liquid crystal display located on the fracturing platform (33).

26. Apparatus, as claimed in Claim 25, wherein the required operative area (24) of the liquid crystal display is clamped to the fracturing platform (33) whilst leaving the excess region (23) freedom to move.

27. Apparatus, as claimed in Claims 25 or Claim 26 wherein the raised region (38) is a ridge.

## Patentansprüche

1. Verfahren zur Umwandlung einer vorgefertigten Flüssigkristall-Anzeigevorrichtung (10), die erste und zweite im Wesentlichen parallel im Abstand zueinander liegende transparente Platten (12, 13) aufweist, die einen Betriebsbereich der Anzeige bilden, wobei ein Flüssigkristall (11) zwischen den Platten (12, 13) angeordnet ist und eine Dichtung (14) die Randbereiche der Platten (12, 13) abdichtet, um den Flüssigkristall (11) zwischen den Platten (12, 13) zu halten,
**dadurch gekennzeichnet, dass** ein überschüssiger Bereich (23) der Platten (12, 13) des Flüssigkristalls (11) und der Abdichtung (14) des Betriebsbereichs der vorgefertigten Flüssigkristall-Anzeigevorrichtung (10) durch Abtrennen entfernt werden, um eine umgewandelte Flüssigkristall-Anzeigevorrichtung (24) mit einem verkleinerten Betriebsbereich zu erhalten.

2. Verfahren nach Anspruch 1, bei welchem der Schritt des Abtrennens dadurch erfolgt, dass in den Platten (12, 13) jeweils Nuten (22, 25) eingearbeitet werden, die aufeinander ausgerichtet sind und indem die beiden Platten (12, 13) längs der jeweiligen Nuten (22, 25) abgebrochen werden.

3. Verfahren nach Anspruch 2, bei welchem die Nuten gleichzeitig eingearbeitet werden.

4. Verfahren nach den Ansprüchen 2 oder 3, bei welchem das Abbrechen durchgeführt wird, indem gleichzeitig beide Platten (12, 13) abgebrochen werden.

5. Verfahren nach Anspruch 2, bei welchem die Schritte der Nutausbildung und des Abbrechens abwechselnd durchgeführt werden, indem eine der Platten (12, 13) genutet und abgebrochen wird, bevor die andere Platte (13) genutet und abgebrochen wird.

6. Verfahren nach einem der Ansprüche 2 bis 5, bei welchem das Abbrechen dadurch erfolgt, dass eine entsprechende Nut (22, 25) auf einen erhöhten Vorsprung ausgerichtet wird und indem ein Druck auf den überschüssigen Bereich (23) ausgeübt wird.

7. Verfahren nach Anspruch 6, bei welchem der Positionierungsschritt dadurch erfolgt, dass ein erster Polarisator (15) zwischen einem Betrachter und den Platten (12, 13) angebracht wird und dass ein zweiter Polarisator (16) zwischen den Platten (12, 13) und einer Strahlungsquelle (37) angebracht wird und indem das Fortschreiten des Bruchs längs der jeweiligen Nut (22, 25) durch den zweiten Polarisator betrachtet wird.

8. Verfahren nach Anspruch 1, bei welchem der Schritt des Abtrennens durchgeführt wird, indem auf die Platten (12, 13) ein Laserstrahl mit einer Energie gerichtetet wird, die ausreicht, um die Platten (12, 13) zu durchdringen und indem eine Relativbewegung zwischen den Platten (12, 13) und dem Laserstrahl bewirkt wird, um die Platten (12, 13) längs einer Schnittlinie (32) zu schneiden und dadurch den überschüssigen Bereich (23) abzutrennen und unversiegelte Schnittkanten an den Platten (12, 13) zu erzeugen.

9. Verfahren nach einem der Ansprüche 1 bis 8, bei welchem weiter eine Viskositätscharakteristik des Flüssigkristalls (11) vermindert wird, bevor der Schritt des Abtrennens durchgeführt wird.

10. Verfahren nach Anspruch 9, bei welchem der Schritt der Viskositätsverminderung dadurch erfolgt, dass die Temperatur des Flüssigkristalls (11) auf eine Gefriertemperatur abgesenkt wird, wobei der Schritt des Abtrennens durch spanabhebende Bearbeitung der Platten (12, 13) durchgeführt wird.

11. Verfahren nach einem der Ansprüche 1 bis 10, bei welchem der Schritt des Abtrennens durchgeführt wird, indem die unversiegelten Ränder der Platten (12, 13) freigelegt werden und dass dann die Ränder wieder versiegelt werden.

12. Verfahren nach Anspruch 11, bei welchem der Schritt der Wiederversiegelung durch gegenseitige thermische Verschmelzung der unversiegelten Ränder durchgeführt wird.

13. Verfahren nach einem der Ansprüche 1 bis 12, bei welchem die Platten Polarisationsschichten (15, 16) auf äußeren Oberflächen der Platten (12, 13) aufweisen und ein Streifen von wenigstens einer der Polarisationsschichten (15, 16) von einer jeweiligen Platte (12, 13) abgeschält wird, bevor der Schritt des Abtrennens durchgeführt wird.

14. Verfahren nach Anspruch 13, bei welchem der Schritt des Abtrennens durchgeführt wird, indem eine Linie durch die Platten (12, 13) geschnitten wird und der Schritt des Abschälens die Erzeugung von zwei Abschällinien auf gegenüberliegenden Seiten der Schnittlinie umfasst, wobei wenigstens eine Polarisationsschicht (15, 16) zwischen den Abschällinien abgeschält wird.

15. Verfahren nach einem der Ansprüche 1 bis 14, bei welchem die Platten leitfähige Schichten (17, 18) auf den inneren Oberflächen der Platten (12, 13) und Treiberverbindungen (21) an wenigstens einer der-Platten (12, 13) aufweisen, um die leitfähigen Schichten (17, 18) zu erregen, wobei weiter ein Schnitt durch die leitfähigen Schichten (17, 18) und wenigstens eine der Treiberverbindungen (21) geführt wird, die mit dem überschüssigen Bereich (23) verbunden sind.

16. Verfahren nach Anspruch 15, bei welchem der Schnitt wenigstens einer Treiberverbindung (21) durchgeführt wird, bevor der Schritt des Abtrennens erfolgt.

17. Verfahren nach Anspruch 11 mit dem Schritt des Abtrennens von Lufteinschlüssen innerhalb des Flüssigkristalls (11), nachdem der Schritt des Abtrennens durchgeführt wurde, aber bevor die Wiederversiegelung erfolgte und die Lufteinschlüsse durch Ausüben eines Druckes gegen wenigstens eine der Platten (12, 13) entfernt wurden.

18. Verfahren nach einem der Ansprüche 1 bis 17, bei welchem der Schritt des Abtrennens dadurch erfolgt, dass die Platten (12, 13) längs einer Richtung senkrecht zu den Platten (12, 13) geschnitten werden.

19. Verfahren nach einem der Ansprüche 1 bis 17, bei welchem der Schritt des Abtrennens dadurch erfolgt, dass die Platten (12, 13) entlang einer Richtung geschnitten werden, die unter einem schrägen Winkel relativ zu den Platten (12, 13) verläuft.

20. Verfahren nach einem der Ansprüche 1 bis 17, bei welchem eine weitere Flüssigkristall-Anzeigevorrichtung (24) aus einer weiteren vorgefertigten Flüssigkristall-Anzeigevorrichtung (10) umgewandelt wird und die umgewandelten Anzeigen (24) eine einzige Verbundanzeige bilden, die einen vergrößerten Betriebsbereich hat.

21. Flüssigkristall-Anzeigevorrichtung (24), welche gemäß dem Verfahren nach einem der Ansprüche 1 bis 20 hergestellt wurde.

22. Verbund-Flüssigkristall-Anzeigevorrichtung, welche aus wenigstens zwei in ihrer Fläche verminderten umgewandelten Flüssigkristall-Anzeigevorrichtungen (24) besteht, die gemäß dem Verfahren nach Anspruch 20 hergestellt sind und die mit ihren jeweiligen Schnittkanten (28, 29) aufeinander ausgerichtet und stumpf aneinandergefügt sind.

23. Verbund-Flüssigkristall-Anzeigevorrichtung nach Anspruch 22, bei welcher die Schnittkanten (28, 29) ausgerichtet durch ein transparentes Laminat abgestützt sind, das über ihre ersten transparenten Platten (12) verklebt ist.

24. Verbund-Flüssigkristall-Anzeigevorrichtung nach Anspruch 23, bei welcher die Schnittkanten (28, 29) außerdem ausgerichtet durch ein zweites Laminat abgestützt sind, das über ihre zweiten transparenten Platten (13) verklebt ist.

25. Vorrichtung zum Abtrennen eines überschüssigen Bereichs (23) einer vorgefertigten Flüssigkristall-Anzeigevorrichtung, die einen Flüssigkristall (11) zwischen einer ersten und einer zweiten mit parallelem Abstand angeordneten transparenten Platte (12, 13) aufweist, die einen Betriebsbereich (23, 24) der Anzeige bilden, wobei eine Nut (23) in eine der Platten (12) zwischen dem überschüssigen Bereich (23) und einem gewünschten Bereich (24) der Flüssigkristall-Anzeige eingeformt ist,
**gekennzeichnet durch** die folgenden Merkmale:
eine Brechplattform (33) mit einer Lichtpolarisationsschicht (34) ist zwischen einer ersten und einer zweiten Trägeroberfläche (35, 36) angeordnet;
eine Bereichsstrahlungsquelle (37) ist so angeordnet, dass eine Strahlung **durch** die Brechplattform (33) gerichtet wird;
ein erhöhter Bereich (38) ist auf der Seite der Brechplattform (33) angeordnet, die der Lichtquelle (37) gegenüberliegt, wobei der erhöhte Bereich (38) eine Platte (13) der Flüssigkristallanzeige in einem Bereich berührt, der im Wesentlichen der Nut (32) in der anderen Platte (12) entspricht; und
eine Lichtpolarisationsschicht (39) ist zwischen der Augenposition (40) des Betrachters und einer Flüssigkristall-Anzeigevorrichtung auf der Brechplattform (33) angeordnet.

26. Vorrichtung nach Anspruch 25, bei welcher der erforderliche Betriebsbereich (24) der Flüssigkristallanzeige an der Brechplattform (33) festgeklemmt ist, während der überschüssige Bereich (23) sich frei bewegen kann.

27. Vorrichtung nach den Ansprüchen 25 oder 26, bei welcher der erhöhte Bereich (38) eine Rippe ist.

## Revendications

1. Un procédé de re-fabrication d'un affichage à cristaux liquides pré-fabriqué (10) ayant une première et une deuxième plaque transparente substantiellement espacées de façon parallèle (12, 13) qui forment une zone opératoire de l'affichage, du cristal liquide (11) entre les plaques (12, 13), et un joint d'étanchéité (14) scellant des zones de bord des plaques (12, 13) pour retenir le cristal liquide (11) entre les plaques (12, 13), **caractérisé par** le retrait d'une zone en excédent (23) des plaques (12, 13), du cristal liquide (11) et du joint d'étanchéité (14) de la zone opératoire de l'affichage à cristaux liquides pré-fabriqué (10) par coupe, pour obtenir un affichage à cristaux liquides re-fabriqué à zone opératoire réduite (24).

2. Un procédé tel que revendiqué dans la revendication 1, dans lequel l'étape de retrait est effectuée en formant dans les plaques (12, 13) des rainures respectives (22, 25) alignées l'une sur l'autre, et en fracturant les deux plaques (12, 13) le long des rainures respectives (22, 25).

3. Un procédé tel que revendiqué dans la revendication 2, dans lequel les rainures sont formées simultanément.

4. Un procédé tel que revendiqué dans la revendication 2 ou la revendication 3, dans lequel l'étape de fracture est effectuée en fracturant simultanément les deux plaques (12, 13).

5. Un procédé tel que revendiqué dans la revendication 2, dans lequel les étapes de formation de rainures et de fracture sont effectuées en alternance en rainurant et fracturant l'une des plaques (12) avant de rainurer et fracturer l'autre plaque (13).

6. Un procédé tel que revendiqué dans n'importe laquelle des revendications 2 à 5, dans lequel l'étape de fracture est effectuée en positionnant une rainure respective (22, 25) en alignement sur une saillie surélevée, et en appliquant une pression contre la zone en excédent (23).

7. Un procédé tel que revendiqué dans la revendication 6, dans lequel l'étape de positionnement est effectuée en positionnant un premier polarisateur (15) entre un observateur et les plaques (12, 13), et un deuxième polarisateur (16) entre les plaques (12, 13) et une source (37) de rayonnement, et en visualisant la propagation de chaque fracture le long de la rainure respective (22, 25) au travers du deuxième polarisateur.

8. Un procédé tel que revendiqué dans la revendication 1, dans lequel l'étape de retrait est effectuée en dirigeant vers les plaques (12, 13) un rayon laser ayant un niveau d'énergie suffisant pour transpercer les plaques (12, 13) et en effectuant un déplacement relatif entre les plaques (12, 13) et le rayon laser pour couper les plaques (12, 13) le long d'une ligne de coupe (32), isolant de ce fait la zone en excédent (23) et formant des bords non scellés coupés sur les plaques (12, 13).

9. Un procédé tel que revendiqué dans n'importe laquelle des revendications 1 à 8, comportant de plus l'étape de réduction d'une caractéristique de viscosité du cristal liquide (11) avant d'effectuer l'étape de retrait.

10. Un procédé tel que revendiqué dans la revendication 9, dans lequel l'étape de réduction est effectuée en réduisant une température du cristal liquide (11) jusqu'à une température de congélation, et dans lequel l'étape de retrait est effectuée en usinant au travers des plaques (12, 13).

11. Un procédé tel que revendiqué dans n'importe laquelle des revendications 1 à 10, dans lequel l'étape de retrait est accompagnée d'une exposition de bords non scellés des plaques (12, 13) ; et comportant de plus l'étape de re-sceller les bords non scellés.

12. Un procédé tel que revendiqué dans la revendication 11, dans lequel l'étape de re-scellement est effectuée par fusion thermique des bords non scellés ensemble.

13. Un procédé tel que revendiqué dans n'importe laquelle des revendications 1 à 12, dans lequel les plaques ont des couches de polarisation (15, 16) sur des surfaces externes des plaques (12, 13) ; et comportant de plus l'étape de décollage, d'une plaque respective (12, 13), d'une bande d'au moins une des couches de polarisation (15, 16) avant d'effectuer l'étape de retrait.

14. Un procédé tel que revendiqué dans la revendication 13, dans lequel l'étape de retrait est effectuée en formant une ligne de coupe au travers des plaques (12, 13), et dans lequel l'étape de décollage comprend la formation de deux lignes de décollage à des côtés opposés de la ligne de coupe, et le décollage de ladite au moins une couche de polarisation (15, 16) entre les lignes de décollage.

15. Un procédé tel que revendiqué dans n'importe laquelle des revendications 1 à 14, dans lequel les plaques ont des couches conductrices (17, 18) sur des surfaces internes des plaques (12, 13), et des connexions d'attaque (21) sur au moins l'une des plaques (12, 13) pour exciter les couches conductrices (17, 18), et comportant de plus l'étape de coupe à travers les couches conductrices (17, 18) et au moins l'une des connexions d'attaque (21) connectées à la zone en excédent (23).

16. Un procédé tel que revendiqué dans la revendication 15, dans lequel l'étape de coupe de ladite au moins une connexion d'attaque (21) est effectuée avant l'étape de retrait.

17. Un procédé tel que revendiqué dans la revendication 11 et comportant de plus l'étape de retrait de vides d'air à l'intérieur du cristal liquide (11), une fois l'étape de retrait effectuée mais avant d'effectuer l'étape de re-scellement, en appliquant une pression contre au moins l'une des plaques (12, 13).

18. Un procédé tel que revendiqué dans n'importe laquelle des revendications 1 à 17, dans lequel l'étape de retrait est effectuée en coupant les plaques (12, 13) le long d'une direction perpendiculaire aux plaques (12, 13).

19. Un procédé tel que revendiqué dans n'importe laquelle des revendications 1 à 17, dans lequel l'étape de retrait est effectuée en coupant les plaques (12, 13) le long d'une direction à un angle oblique par rapport aux plaques (12, 13).

20. Un procédé tel que revendiqué dans n'importe laquelle des revendications 1 à 17, comportant de plus l'étape de réalisation d'un autre affichage à cristaux liquides re-fabriqué (24) à partir d'un autre affichage à cristaux liquides pré-fabriqué (10) ; et l'étape de combinaison des affichages re-fabriqués (24) pour former un affichage composite unique ayant une zone opératoire de taille accrue.

21. Un affichage à cristaux liquides (24) fabriqué selon le procédé de n'importe laquelle des revendications 1 à 20.

22. Un affichage à cristaux liquides composite comportant au moins deux affichages à cristaux liquides re-fabriqués à zones opératoires réduites (24) réalisés selon le procédé de la revendication 20, soutenus de façon à ce que leurs bords coupés respectifs (28, 29) soient alignés et jointifs.

23. Un affichage à cristaux liquides composite, tel que revendiqué dans la revendication 22, dans lequel les bords coupés (28, 29) sont soutenus en alignement par une lamelle transparente qui adhère sur leurs premières plaques transparentes (12).

24. Un affichage à cristaux liquides composite, tel que revendiqué dans la revendication 23, dans lequel les bords coupés (28, 29) sont en supplément soutenus en alignement par une deuxième lamelle qui adhère sur leurs deuxièmes plaques transparentes (13).

25. Appareil, pour aider au retrait d'une zone en excédent (23) d'un affichage à cristaux liquides pré-fabriqué ayant du cristal liquide (11) scellé entre une première et une deuxième plaque transparente espacées parallèles (12, 13) qui forment une zone opératoire (23, 24) de l'affichage, et présentant une rainure (32) ayant été formée dans l'une des plaques (12) entre la zone en excédent (23) et une zone requise (24) de l'affichage à cristaux liquides, **caractérisé en ce qu'**il comporte :
une plate-forme de fracture (33) ayant une couche de polarisation de la lumière (34) située entre une première et une deuxième surface de support transparente (35, 36),
une source de zone de rayonnement (37) située pour émettre un rayonnement à travers la plate-forme de fracture (33),
une zone surélevée (38) agencée sur une surface opposée de la plate-forme de fracture (33) à celle sur laquelle la source de lumière (37) est située, la zone surélevée (38) étant agencée pour être au contact d'une plaque (13) de l'affichage à cristaux liquides dans une zone correspondant substantiellement à la rainure (32) dans l'autre plaque (12), et
une couche de polarisation de la lumière (39) disposée entre une position de l'oeil d'un observateur (40) et un affichage à cristaux liquides situé sur la plate-forme de fracture (33).

26. Appareil, tel que revendiqué dans la revendication 25, dans lequel la zone opératoire requise (24) de l'affichage à cristaux liquides est fixée par serrage à la plate-forme de fracture (33) tout en laissant la zone en excédent (23) libre de se déplacer.

27. Appareil, tel que revendiqué dans la revendication 25 ou la revendication 26, dans lequel la zone surélevée (38) est une arête.
